# EUROPÄISCHE PATENTSCHRIFT

(11) **EP 1 130 609 B1**
(45) Veröffentlichungstag und Bekanntmachung des Hinweises auf die Patenterteilung: **13.04.2005**
(21) Anmeldenummer: 01103637.3
(22) Anmeldetag: 22.02.2001
(51) Int. Cl.: H01H 3/02

(54) **Bauteil**
Component
Composant

(30) Priorität: 29.02.2000 DE 20003679 U
(43) Veröffentlichungstag der Anmeldung: 05.09.2001
(73) Patentinhaber: TRW Automotive Electronics & Components GmbH & Co. KG, 78315 Radolfzell (DE)
(72) Erfinder: Hacke, Frank, 78256 Steisslingen (DE)
(74) Vertreter: Degwert, Hartmut, Dipl.-Phys.

(56) Entgegenhaltungen:
- DE-A- 19 715 536
- US-A- 2 440 943
- US-A- 3 928 742
- US-A- 5 824 982

## Beschreibung

Die Erfindung betrifft ein Bauteil mit einem Grundkörper aus einem relativ harten Material und einem Überzug aus relativ weichem Material.

Bauteile wie Verkleidungselemente in Fahrzeugen, Bedienelemente und Tasten zur Betätigung von elektrischen Schaltern werden oft mit einem Überzug aus griffsympathischem Material, insbesondere einem gummiartigen Material, versehen. Wenn es nicht möglich oder nicht erwünscht ist, zwischen dem Grundkörper des Bauteils, der aus einem relativ harten Material, insbesondere Kunststoff, besteht, und dem Material des Überzugs einen innigen Verbund herzustellen, ist es notwendig, den Überzug mechanisch am Grundkörper zu befestigen. Dazu können Grundkörper und Überzug mit formschlüssig ineinandergreifenden Gestaltungen ausgeführt werden. Dennoch kommt es oft zu Ablösungen und zu Verwerfungen des Überzugs.

Ein solches Bauteil ist zum Beispiel aus der US-A-5 824 982 bekannt.

Durch die Erfindung wird ein Bauteil der vorstehend genannten Art geschaffen, bei dem der Überzug aus relativ weichem Material zuverlässig ohne Ablösungen oder Verwerfungen an dem Grundkörper gehalten wird. Das erfindungsgemäße Bauteil hat einen Grundkörper aus einem relativ harten Material und einen Überzug aus relativ weichem Material, der die durch einen Außenumfang begrenzte Hauptfläche des Grundkörpers abdeckt. An den Außenumfang der Hauptfläche des Grundkörpers schließt vorzugsweise eine abgewinkelte Tragstruktur an. Der Überzug ist vorzugsweise bis über diese Tragstruktur fortgesetzt. Der vom Außenumfang des Hauptfläche ausgehende Randbereich des Überzugs weist eine Armierung aus einem relativ harten Material auf, die insbesondere an dem Grundkörper angreift, mit diesem aber auch verschraubt sein kann. Durch die im Randbereich vorgesehene Armierung steht eine mechanisch beanspruchbare Struktur zur Verfügung, die einen sicheren Halt an dem Grundkörper ermöglicht. Bei der bevorzugten Ausführungsform ist die Armierung mit dem Grundkörper verrastet. Eine solche Verbindung ist besonders dann zweckmäßig, wenn durch übliche Herstellungsverfahren wie das Spritzgießen mit mehreren Kunststoffkomponenten ein fester Verbund zwischen Grundkörper und Überzug nicht zu erreichen ist.

Bei der bevorzugten Ausführungsform wird ferner der Überzug durch die Armierung in einem gespannten Zustand an dem Grundkörper gehalten.
Dadurch ist eine glatte Oberfläche des Überzugs gewährleistet.

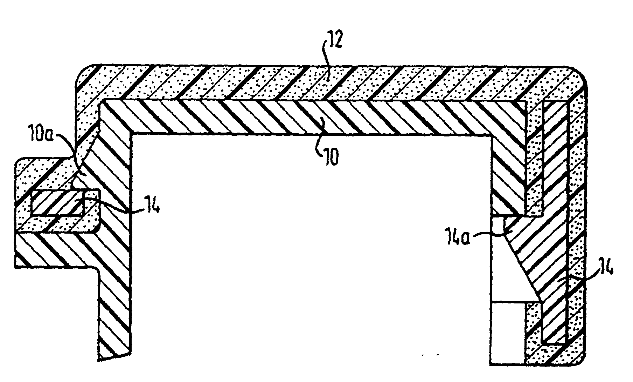

Weitere Merkmale und Vorteile der Erfindung ergeben sich aus der folgenden Beschreibung eines Ausführungsbeispiels unter Bezugnahme auf die beigefügte Zeichnung. Die einzige Figur der Zeichnung zeigt ein Ausführungsbeispiel des erfindungsgemäßen Bauteils in einer Schnittansicht.

Bei dem in der Zeichnung gezeigten Bauteil handelt es sich um eine Tastenkappe zur Betätigung eines elektrischen Schalters, insbesondere für ein Multifunktionslenkrad.

Das Bauteil besteht aus einem kappenförmigen Grundkörper 10 aus einem relativ harten Kunststoffmaterial und einem Überzug 12 aus einem gummiartigen, relativ weichen Material. Der Grundkörper 10 hat eine Hauptfläche und seitlich davon abgewinkelte Randbereiche. Der Überzug 12 erstreckt sich über die Hauptfläche des Grundkörpers 10 und ist bis über den Randbereich desselben fortgesetzt. In dem entsprechenden Randbereich des Überzugs 12 ist eine Armierung in Form eines Verstärkungsrings 14 aus relativ starrem Material eingebettet. Am Grundkörper 10 ist wenigstens eine Rastnase 10a angeformt, die von einer Rastkante des Verstärkungsrings 14 hintergriffen wird. Ferner ist an dem Verstärkungsring 14 eine Rastnase 14a angeformt, die von einer Rastkante des Grundkörpers 10 hintergriffen wird. Durch die Rastverbindung zwischen dem Grundkörper 10 und dem Überzug 12 ist auch ohne Verbund zwischen den Werkstoffen des Grundkörpers und des Überzugs eine zuverlässige Verbindung zwischen diesen Teilen gewährleistet. Vorzugsweise wird der Überzug 12 durch die Rastverbindung in einem gespannten Zustand an dem Grundkörper 10 gehalten, so daß der Überzug 12 auf seiner dem Benutzer zugewandten Seite stets eine glatte Fläche aufweist. Durch den gespannten Zustand des Überzugs 12 am Grundkörper 10 werden auch Herstellungstoleranzen und temperaturbedingte Schwankungen ausgeglichen.

## Patentansprüche

1. Bauteil mit einem Grundkörper (10) aus einem relativ harten Material und einem Überzug aus relativ weichem Material, der wenigstens die durch einen Außenumfang begrenzte Hauptfläche des Grundkörpers abdeckt, **dadurch gekennzeichnet, dass** ein vom Außenumfang der Hauptfläche ausgehender Randbereich des Überzugs eine Armierung (14) aus relativ hartem Material aufweist, die an dem Grundkörper (10) angreift.

2. Bauteil nach Anspruch 1, **dadurch gekennzeichnet, daß** an den Außenumfang der Hauptfläche des Grundkörpers eine abgewinkelte Tragstruktur anschließt.

3. Bauteil nach Anspruch 2, **dadurch gekennzeichnet, daß** der Überzug bis über die Tragstruktur fortgesetzt ist.

4. Bauteil nach Anspruch 1, bei dem die Armierung mit dem Grundkörper verrastet ist.

5. Bauteil nach Anspruch 1, **dadurch gekennzeichnet, daß** die Armierung mit dem Grundkörper verschraubt ist.

6. Bauteil nach einem der Ansprüche 2 bis 5, bei dem die Armierung durch einen im Randbereich des Überzugs eingebetteten Versteifungsring gebildet ist.

7. Bauteil nach einem der vorstehenden Ansprüche, bei dem Grundkörper und Armierung miteinander zusammenwirkende Rastnasen und Rastkanten aufweisen.

8. Bauteil nach einem der vorstehenden Ansprüche, bei dem der Überzug aus einem gummiartigen Material besteht.

9. Bauteil nach einem der vorstehenden Ansprüche, bei dem der Überzug durch die Armierung in einem gespannten Zustand an dem Grundkörper gehalten wird.

10. Bauteil nach einem der vorstehenden Ansprüche, **gekennzeichnet durch** seine Ausbildung als Bedienelement.

11. Bauteil nach einem der vorstehenden Ansprüche, **gekennzeichnet durch** seine Ausbildung als Tastenkappe zur Betätigung eines elektrischen Schalterns.

## Claims

1. A component comprising a base body (10) made of a relatively hard material and a coating (12) made of a relatively soft material and covering at least the main surface area of the base body, the main surface area being delimited by an outer periphery, **characterized in that** an edge portion of the coating extending from the outer periphery of the main surface area has a reinforcement (14) made of a relatively hard material and engaging the base body (10).

2. The component as set forth in claim 1, **characterized in that** the outer periphery of the main surface area of the base body is adjoined by an angled support structure.

3. The component as set forth in claim 2, **characterized in that** the coating is extended beyond the support structure.

4. The component as set forth in claim 1, in which the reinforcement is latched to the base body.

5. The component as set forth in claim 1, **characterized in that** the reinforcement is screwed to the base body.

6. The component as set forth in any of claims 2 to 5, in which the reinforcement is formed by a stiffening ring embedded in the edge portion of the coating.

7. The component as set forth in any of the preceding claims, in which the base body and the reinforcement comprise latching keys and latching edges which cooperate with each other.

8. The component as set forth in any of the preceding claims, in which the coating is made of a rubber-like material.

9. The component as set forth in any of the preceding claims, in which the coating is held in a tensioned condition on the base body by the reinforcement.

10. The component as set forth in any of the preceding claims, **characterized by** it being configured as an operating element.

11. The component as set forth in any of the preceding claims, **characterized by** it being configured as a key cap for actuating an electric switch.

## Revendications

1. Composant comportant un corps de base (10) en un matériau relativement dur et un revêtement (12) en un matériau relativement souple qui recouvre au moins la surface principale du corps de base délimitée par une périphérie extérieure, **caractérisé en ce qu'**une région de bord du revêtement, partant de la périphérie extérieure de la surface principale, présente une armature (14) en matériau relativement dur qui s'engage sur le corps de base (10).

2. Composant selon la revendication 1, **caractérisé en ce qu'**à la périphérie extérieure de la surface principale du corps de base se raccorde une structure portante coudée.

3. Composant selon la revendication 2, **caractérisé en ce que** le revêtement est prolongé sur la structure portante.

4. Composant selon la revendication 1, dans lequel l'armature est enclenchée avec le corps de base.

5. Composant selon la revendication 1, **caractérisé en ce que** l'armature est vissée au corps de base.

6. Composant selon l'une des revendications 2 à 5, dans lequel l'armature est formée par un anneau de renforcement noyé dans la région de bord du revêtement.

7. Composant selon l'une des revendications précédentes, dans lequel le corps de base et l'armature présentent des ergots d'enclenchement et des arêtes d'enclenchement coopérant les uns aux autres.

8. Composant selon l'une des revendications précédentes, dans lequel le revêtement est en un matériau de nature caoutchouteuse.

9. Composant selon l'une des revendications précédentes, dans lequel le revêtement est maintenu par l'armature dans un état de tension sur le corps de base.

10. Composant selon l'une des revendications précédentes, **caractérisé par** sa réalisation en tant qu'élément de maniement.

11. Composant selon l'une des revendications précédentes, **caractérisé par** sa réalisation en tant que capuchon de touche pour l'actionnement d'un interrupteur électrique.
